# EUROPEAN PATENT SPECIFICATION

(11) **EP 1 902 445 B1**
(45) Date of publication and mention of the grant of the patent: **27.11.2013**
(21) Application number: 06787226.7
(22) Date of filing: 14.07.2006
(51) Int. Cl.: G11B 27/10, G11B 27/11, G11B 20/00

(54) **METHOD AND APPARATUS FOR PROVIDING AN AUXILIARY MEDIA IN A DIGITAL CINEMA COMPOSITION PLAYLIST**
VERFAHREN UND VORRICHTUNG ZUR BEREITSTELLUNG VON HILFSDATENTRÄGERN FÜR EINE ZUSAMMENSETZUNGSSPIELLISTE FÜR DIGITALES KINO
PROCEDE ET APPAREIL POUR LA FOURNITURE D'UN SUPPORT AUXILIAIRE DANS UNE LISTE DE DIFFUSION DE COMPOSITIONS CINEMATOGRAPHIQUES NUMERIQUES

(30) Priority: 14.07.2005 US 699264 P
(43) Date of publication of application: 26.03.2008
(73) Proprietor: Thomson Licensing, 92130 Issy-les-Moulineaux (FR)
(72) Inventor: BENITEZ, Ana, Belen, Los Angeles, CA 90036 (US); BOX, Thomas, Chandler, Agoura Hills, CA 91301 (US)
(74) Representative: Esselin, Sophie
(86) International application number: PCT/US2006/027289
(87) International publication number: WO 2007/011683

(56) References cited:
- EP-A- 1 608 165
- EP-A- 1 736 990
- WO-A-2004/075601
- DE-A1- 19 936 720
- US-A1- 2004 220 926

## Description

### FIELD OF THE INVENTION

The present invention relates generally to authoring, delivering and reproducing auxiliary media in a Digital Cinema application.

### BACKGROUND OF THE INVENTION

This section is intended to introduce the reader to various aspects of art, which may be related to various aspects of the present invention that are described and/or claimed below. This discussion is believed to be helpful in providing the reader with background information to facilitate a better understanding of the various aspects of the present invention. Accordingly, it should be understood that these statements are to be read in this light, and not as admissions of prior art.

Prior-art document US2004220926 discloses a simultaneous playback of multimedia information i.e. Audio, Video, Text (see Figs. 8, 11 of said document). However it does not disclose the simultaneous playback of two different language tracks additional to any other information such as the video.

The term "Digital Cinema" refers generally to the creation and/or distribution of motion pictures to cinemas in digital form, in contrast to traditional cinema whose content, including the image, soundtrack and subtitles, exists in an analog form on motion picture film. Digital Cinema projection systems now exist and make use of a variety of technical solutions, rather than a single standardized solution embraced by all. The existence of content in digital form affords the opportunity to provide alternative information along with the original content with little effort. For that reason various organizations, such as the Digital Cinema Initiative ("DCI") and the Society for Motion Picture Engineering ("SMPTE") have devoted much effort towards establishing specifications for digital cinema content distribution.

The DCI specification defines preferred solutions in many areas, such as encoding, distribution, and security. The SMPTE has sought to refine the DCI specification from a technical and implementation perspective. The goal of these specifications is to provide an architecture that promotes high level and uniform technical performance. The system can provide enhanced sound and image content while providing the theatre patron with a more consistent movie experience. The system also affords potential simplification of production and distribution, delivery, and storage of the movie content.

Although Digital Cinema and the DCI specification affords potential simplification of production and distribution, delivery, and storage of the movie content, they currently do not support the inclusion of different kinds of auxiliary media, such as auxiliary soundtracks, in a normative and interoperable way. This drawback is important. For example, consider the case in which a digital film is to be presented in a cinema auditorium to viewers that communicate in different languages. If only one set of viewers can hear the audio in their spoken language and only another set of viewers can view subtitles in their written language, all the remaining viewers may have a difficult time following and enjoying the digital film. As a result, by not providing auxiliary media such as auxiliary soundtracks, Digital Cinema may be viewed as not providing all the viewers of a digital film with a rewarding experience.

The present disclosure is directed towards overcoming these drawbacks.

### SUMMARY OF THE INVENTION

The disclosed embodiments of the present invention are directed towards creating, packaging, distributing, and reproducing auxiliary media tracks, such as a second language audio track, within a digital mastering and distribution system for motion pictures, such as that used in Digital Cinema. One embodiment of the present invention appends data structures and elements to the current existing management structure for representing digital cinema presentations maintaining complete interoperability and causing minimal impact to the existing structure while providing an enhanced service and experience to movie audience.

Another embodiment of the present invention includes a composition playlist having main assets identifying a sound file and a picture file to be reproduced in parallel, and an auxiliary asset associated with at least one of the main assets and identifying an auxiliary file to be reproduced in parallel with the sound file and the picture file.

A further embodiment of the present invention includes a method for packaging an auxiliary media track, the method includes the steps of receiving a digital cinema distribution master that contains media tracks, identifying main media tracks, identifying an auxiliary media track, and creating a digital cinema package containing the main media tracks, the auxiliary media track, and instructions to reproduce the main media tracks and the auxiliary media tracks in parallel.

Yet another embodiment of the present invention includes a method for reproducing an auxiliary media track, the method including the steps of receiving a digital cinema package containing presentation content, separating a main presentation content from an auxiliary presentation content, processing the main presentation content to extract main media tracks, processing the auxiliary presentation content to extract an auxiliary media track, and providing the main media tracks in parallel with the auxiliary media track.

### BRIEF DESCRIPTION OF THE DRAWINGS

In the drawings:
FIG. 1 is a block diagram of an exemplary Digital Cinema system using an embodiment of the present invention.
FIG. 2 is a diagram illustrating an exemplary Digital Cinema auditorium system using an embodiment of the present invention.
FIG. 3 is a block diagram illustrating an exemplary cinema server using an embodiment of the present invention.
FIG. 4 is a block diagram illustrating an exemplary production and distribution system using an embodiment of the present invention.
FIG. 5 is a diagram illustrating an exemplary composition playlist containing an embodiment of the present invention.
FIG. 6 is a diagram of an embodiment of an exemplary auxiliary sound element of the present invention.
FIG. 7 is a diagram of an embodiment of an exemplary auxiliary soundtrack file asset type structure of the present invention.
FIG. 8 is a flowchart illustrating a process for creating a digital cinema package in accordance with an embodiment of the present invention.
FIG. 9 is a flowchart illustrating a process for receiving and processing a digital cinema package in accordance with an embodiment of the present invention.

The characteristics and advantages of the present invention may become more apparent from the following description, given by way of example.

### DETAILED DESCRIPTION

One or more specific embodiments of the present invention will be described below. In an effort to provide a concise description of these embodiments, not all features of an actual implementation are described in the specification. It should be appreciated that in the development of any such actual implementation, as in any engineering or design project, numerous implementation-specific decisions must be made to achieve the developers; specific goals, such as compliance with system-related and business-related constraints, which may vary from one implementation to another. Moreover, it should be appreciated that such a development effort might be complex and time consuming, but would nevertheless be a routine undertaking of design, fabrication, and manufacture for those of ordinary skill having the benefit of this disclosure.

The following describes a system for delivering auxiliary media, e.g., auxiliary soundtracks, associated with a movie presentation using digital cinema. Other systems utilized to deliver auxiliary media related to other presentations where the input may be supplied by some other means may include very similar structures. Those of ordinary skill in the art will appreciate that the embodiment of the system and circuits described herein is merely one potential embodiment. As such, in alternate embodiments, the components of the system and circuits may be rearranged or omitted, or additional components may be added.

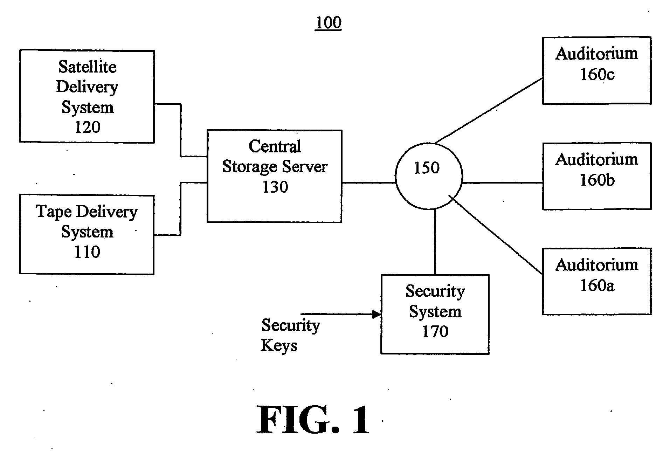

Turning now to the drawings and referring initially to FIG. 1, a block diagram of an exemplary system using an embodiment of the present invention is shown. FIG. 1 illustrates a content delivery system 100 such as that used for delivering digital cinema content. A digital cinema package (DCP) is provided to a central storage server 130. The DCP may be supplied to the central storage server using a number of delivery systems including tape, disk, satellite, wireless, or wired systems. In a preferred embodiment, the DCP information is supplied to the central storage server 130 via a satellite delivery system 110, with a tape delivery system 120 used as a back up. As discussed in further detail below, the DCP contains the essence files including compressed and encrypted track files containing audio, pictures, and subtitles, in addition to a composition playlist that dictates how the track files are to be played.

The Central Storage Sever 130 supplies a DCP to one or more auditoriums 160a,b,c over a network using a network interface 150. In a preferred embodiment, the network interface 150 is an Ethernet hub. The auditoriums 160a,b,c may be located together within one building complex. Alternately, the auditoriums 160a,b,c may be located in different buildings and even located significant distances from each other. The arrangement of the auditoriums 160a,b,c may determine the type of network employed for delivery of the DCP.

In order to prevent unauthorized reception of the DCP from the central storage server 130, a security system 170 may be provided. The security keys may be generated in conjunction with or separately from the delivery system 100. In one embodiment, the security keys are provided by the DCP content provider based on valid authorization information for both the content and the auditorium using the content. Further, each of the keys may be associated with only one of the auditoriums 160a,b,c, preventing unauthorized delivery of content to any of the other auditoriums 160a,b,c.

The auditoriums 160a,b,c receive a DCP based on requests made by equipment within the auditoriums 160a,b,c, not shown. Alternately, the auditoriums 160a,b,c may receive an DCP based on a delivery schedule provided by either the central storage server 130 or by an additional auditorium content manager, not shown. The auditoriums 160a,b,c process the DCP in order to produce the media for both audio and picture presentation to the patrons in attendance. The auditoriums 160a,b,c may also be able to transmit any auxiliary content provided with the DCP to the patrons. The delivery and reception of the auxiliary content is further described below.

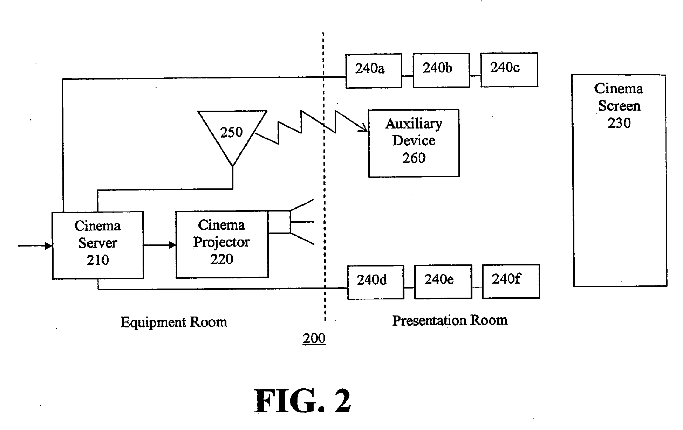

Turning now to FIG. 2, a block diagram of an exemplary auditorium system 200 using an embodiment of the present invention is shown. Auditorium 200 is often divided into several rooms. In a preferred embodiment, auditorium 200 is divided into a presentation room and an equipment room. The presentation room is used by the patrons of the auditorium 200 during a presentation such as a movie. The equipment room is used by the operators of the auditorium 200 for housing most of the equipment necessary for the presentation, and additionally is usually not accessible by the patrons.

The DCP signal is supplied from a network interface to a cinema server 210 located in the equipment room of auditorium 200. The cinema server 210 provides the signal processing necessary to separate the various elements of the DCP stream into appropriate picture, audio, and subtitle signals for presentation. The cinema server 210 may also provide any picture signal formatting necessary, such as converting the picture signal to a correct format and aspect ratio for display in the presentation room of the auditorium 200. The cinema server 210 may also process and convert the audio signal in order to separate and further generate the various audio channels as needed for the audio reproduction system employed.

The cinema server 210 also separates and manages any auxiliary media provided through the DCP stream. The cinema server 210 establishes any timing for delivery of the auxiliary media content by decoding synchronization information supplied within the DCP.

A picture content signal output from the cinema server 210 is supplied to a cinema projector 220. The cinema projector 220 receives the picture content signal and generates a light emitting picture output for display on a cinema screen 230 located in the presentation room of the auditorium 200. In a preferred embodiment, the cinema projector 220 receives a picture content signal in the form of a digital data stream representative of the luminance levels of the three colors red, green, and blue. Picture information pertaining to each of these colors is separated and provided to a digital light projection (DLP) circuit that uses a high intensity polarized light source in order to produce and project the picture through an opening in the wall adjoining the two rooms in the auditorium 200. The projected light source, representing the cinema presentation picture image, is projected to the other end of the presentation room of the auditorium 200 and displayed on the cinema screen 230.

A subtitle content signal from the cinema server 210 may also be supplied to the cinema projector 220. The cinema projector 220 receives the subtitle content signal and combines the subtitle content signal with the picture content signal and generates a light emitting picture output for display on the cinema screen 230 located in the presentation room of the auditorium 200.

An audio content signal from the cinema server 210 is supplied to speakers 240a-f located in the presentation room of auditorium 200. The speakers 240a-f may include additional signal processing such as audio equalization and/or amplification. The audio content signal may alternately use a centrally located processing system, not shown, for audio equalization and amplification. The central processing system may then provide the equalized and amplified signals to speakers 240a-f. The number and location of the speakers used in the presentation room may vary depending on requirements and design. In a preferred embodiment, six speakers 240a-f are located with three on each side wall of the presentation room of the auditorium 200. The speakers 240a-f are positioned equidistant spanning the length of a side and pointed perpendicular to the cinema screen 230.

An auxiliary media signal (e.g., an auxiliary soundtrack signal) from the cinema server 230 is supplied to antenna 250. The cinema server 230 may include any signal processing, including signal amplification, to put the auxiliary media signal in a condition for transmission by antenna 250. Alternately, a separate amplifier, not shown, may process and amplify the auxiliary media signal prior to transmission. The transmission method may involve the protocols associated with a wireless network system such as Wi-Fi. The transmission method may also involve use of cellular phone network communications. The transmission method may also involve a proprietary approach using either analog or digital communications techniques such as frequency modulation (FM) or quaternary phase shift keying (QPSK).

The auxiliary media signal is transmitted from antenna 250 and may be received by auxiliary media device 260. The auxiliary media device 260 receives the auxiliary media signal, decodes the auxiliary media signal, and provides the auxiliary media signal to the patron via the electronic media device 260. The auxiliary media device 260 may be embodied as a wireless network or Wi-Fi terminal, a headphone, a cellular phone, a pager, or a proprietary communications device.

It should be appreciated that alternative delivery systems for providing the auxiliary media signal (e.g., the auxiliary soundtrack signal), other than the wireless delivery system described above, may be utilized as known by those skilled in the art. For example, the auxiliary media signal may be delivered (in a wireless or wired manner) to speakers in a special sound-proof room contained within the presentation room. The special sound-proof room would permit the viewers within the room to view the cinema presentation on the same cinema screen 200 as the viewers outside of the sound-proof room but would allow the viewers within the sound-proof room to listen to the auxiliary sound associated with the cinema presentation. Another example may include the auxiliary media signal be delivered through a wired network to headphones provided at seats positioned in the presentation room of the auditorium 200.

The auxiliary media device 260 may include a display and some type of audio driver such as a speaker or a headphone connection. The auxiliary media device 260 may further include user controls for permitting a patron to control operation.

The cinema server 210 may additionally include a receiver circuit and include processing for determining and maintaining a roster of auxiliary media devices 260 that are active and in use in the auditorium 200. The cinema server 210, through an identifier signal for an auxiliary media device, could further target delivery of auxiliary audio tracks only to patrons who desire receive the auxiliary audio tracks.

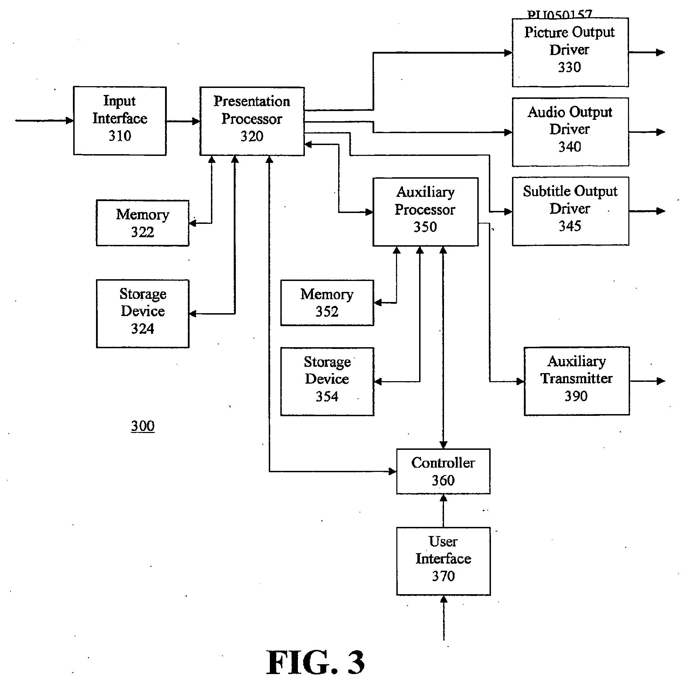

Turning now to FIG. 3, a block diagram of an exemplary cinema server 300 using an embodiment of the present invention is shown. Cinema server 300 has the capability for processing a DCP. An input data stream, representing a DCP, is input through the input interface 310. The input interface 310 provides the necessary signal conversion from the delivery format and signaling protocol to a data interface more readily processed within the cinema server 300. In a preferred embodiment, the input interface 310 may provide a conversion from an Ethernet signal format into a parallel 8 bit bus signal format.

The converted data stream from the input interface 310 is provided to a presentation processor 320. The presentation processor 320 separates the converted data stream into sets of individual presentation content, such as picture, audio, subtitles, and auxiliary media content. The presentation processor 320 also separates and decodes any code instructions supplied as part of the DCP. The presentation processor 320 operates on the incoming converted data stream following code instructions provided within the DCP. The presentation processor 320 may operate using instructions included internally. The presentation processor 320 may also separate and decode any security information, and may perform such functions as key validation for valid receipt of the DCP. The presentation processor 320 may also provide initial signal processing for the individual presentation content.

The presentation processor 320 also processes content synchronization information for the presentation. The synchronization information may be supplied along with, or as part of, the instructions provided in the DCP. Synchronization of the content then proceeds based on instructions within the DCP structure as well as instructions within the presentation processor 320. Time base information required to perform the synchronization may also be supplied within the instruction provided in the DCP, or alternately may be generated by the presentation processor 320.

A memory 322 may be connected to the presentation processor 320. Memory 322 may primarily store portions of the incoming converted data stream as well as store portions of the presentation signals in order to facilitate content synchronization. Memory 322 may also be used to store control information and operating code for the presentation processor 320 as well as intermediate computational values for any processing. In a preferred embodiment, memory 322 is in the form of random access memory (RAM) and is used for all memory requirements. In another embodiment, memory 322 includes RAM for operations control of the presentation processor 320 as well as storage of portions of the data stream and presentation signal. A read only memory (ROM) is used to store initialization and control software for the presentation processor 320.

Memory 322 may also store critical security information such as keys or algorithms. Portions of the security information may be stored in either RAM or ROM. It is also important to note that some other method of storing and retrieving security information may be used as is well known to those skilled in the art.

A storage device 324 may also be connected to the presentation processor 320. The storage device 324 has more storage capacity than the memory 322 and may also be capable of storage over a longer period of time. Storage device 324 may be used to store larger segments of the incoming converted data stream. Alternately, storage device 324 may store an entire DCP, allowing the cinema server 300 to essentially download a DCP in its entirety prior to processing the DCP using the presentation processor 320. In a preferred embodiment, storage device 324 is a hard disk drive.

The presentation processor 320 outputs several presentation signals, including the picture, audio and subtitle presentation signals as required for presentation.

The picture presentation output signal from the presentation processor 320 is provided to the picture output driver 330. In a preferred embodiment, the picture presentation output signal is a digital picture signal and the picture output driver 330 provides the picture presentation output signal to the cinema projector 220 for projection onto the cinema screen 230.

The audio presentation output signal from the presentation processor 320 is provided to the audio output driver 340. The audio output driver 340 provides the audio presentation signal to the speakers 240a-f.

The subtitle presentation output signal from the presentation processor 320 is provided to the subtitle output driver 345. The subtitle output driver 345 provides the subtitle presentation output signal to the cinema projector 220 for projection onto the cinema screen 230.

The auxiliary media output signal (e.g., an auxiliary soundtrack signal) from the presentation processor 320 is provided to the auxiliary processor 350. The auxiliary processor 350 provides any additional processing of the auxiliary media output signal, if necessary. The auxiliary processor 350 manages the auxiliary audio media output signal and also manages any additional auxiliary data.

It should be noted that although the presentation processor 320 and auxiliary processor 350 are illustrated as separate processors, the processors may be combined into a single processor as known by those skilled in the art.

The auxiliary media signal is output from the auxiliary processor 350 to the auxiliary transmitter 390. The auxiliary transmitter 390 may format the auxiliary media signal into a suitable transmission signal such as a QPSK signal. The auxiliary transmitter 390 may also process the transmission signal to add elements such as error correction, as required by a particular transmission standard or as is well known to one skilled in the art. As discussed above, the auxiliary media signal may be delivered in an alternative wired manner such as through a wired network to speakers in a soundproof room or to speakers provided at theater seats. When the auxiliary media signal is delivered in a wired manner, the auxiliary transmitter 390 may be replaced by an auxiliary driver, as known by those skilled in the art.

A memory 352 may be connected to the auxiliary processor 350. Memory 352 may primarily store portions of the auxiliary media content or any additional auxiliary data to facilitate content synchronization. Memory 352 may also be used to store control information and operating code for the auxiliary processor 350 as well as intermediate computational values for any processing. In a preferred embodiment, memory 352 is in the form of random access memory (RAM) and is used for all memory requirements. In another embodiment, memory 352 includes RAM for operations control of the auxiliary processor 350 as well as storage of portions of auxiliary media content. A read only memory (ROM) is used to store initialization and control software for the auxiliary processor 350.

A storage device 354 may also be connected to the auxiliary processor 350. The storage device 354 has more storage capacity than the memory 352 and may also be capable of storage over a longer period of time. Storage device 354 may be used to store larger segments of auxiliary media content. Alternately, storage device 354 may store additional auxiliary media content provided to or generated by the cinema server. The storage device 354 allows the cinema server 300 to receive additional auxiliary media content in its entirety at period of time in advance of delivering the content as auxiliary audio tracks in conjunction with a presentation. In a preferred embodiment, storage device 354 is a hard disk drive.

A controller 360 is connected to both the presentation processor 320 and auxiliary processor 350. Controller 360 may manage the interaction between the two processors as well as execute or process instructions delivered with the DCP. Controller 360 may maintain identifiers for devices capable of and/or receptive of delivery of auxiliary media. Controller 360 may also be capable of processing return data.

A user interface 370 is connected to controller 360 and may allow interactive control information between a person operating or controlling the presentation and the cinema server 300. The user interface 370 may provide external connections for a control display monitor, touch screen system, mouse, and/or keyboard.

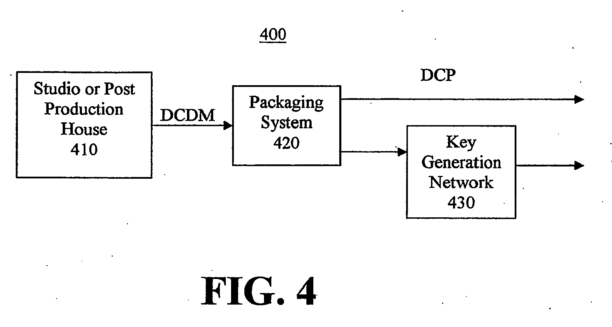

Turning now to FIG. 4, an exemplary production and distribution system 400 containing an embodiment of the present invention is shown. System 400 includes a studio or post-production house 410, packaging system 420, and key generation system 430.

The digital post-production of a film occurs at the studio or post production house 410. More specifically, film is scanned from camera-original film negatives into a digital format on a scanner or high-resolution telecine. Alternatively, data from digital motion picture cameras may be converted to a convenient image file format for processing. All of the files are conformed to match an edit list created by the film editor, and are then color corrected under the direction of the film's staff. The end result of post-production is a digital intermediate. The digital intermediate may be used to record the motion picture to film or as the basis for the digital cinema release. When all of the sound (e.g., main soundtrack and all auxiliary soundtracks), picture, and data elements of a production have been completed, they may be assembled into a Digital Cinema Distribution Master (DCDM) that contains all of the digital material needed for a presentation. The mastering stage for creating the DCDM may occur internally within the studio or post-production house or may occur external to the studio or post production house.

The DCDM is sent to a packaging system 420. The packaging system 420, in accordance with embodiments of the present invention, compresses, encrypts, and packages the pictures, sounds, and subtitles contained in the DCDM to form a Digital Cinema Package (DCP). The DCP contains the essence to be presented including compressed and encrypted track files containing audio, picture, and subtitle data, and a composition playlist (CPL) that dictates, among other things, how the track files are to be played.

The DCP is transmitted from the packaging system 420 to the central storage server 130 via different methods that may include hard drives, DVDs, or satellite, as previously discussed. The packaging system 420 may also interact with a key generation network 430 that ensures that the proper encryption keys are also communicated to the Digital Cinema theaters (i.e., to the security system 170 associated with the Digital Cinema theaters).

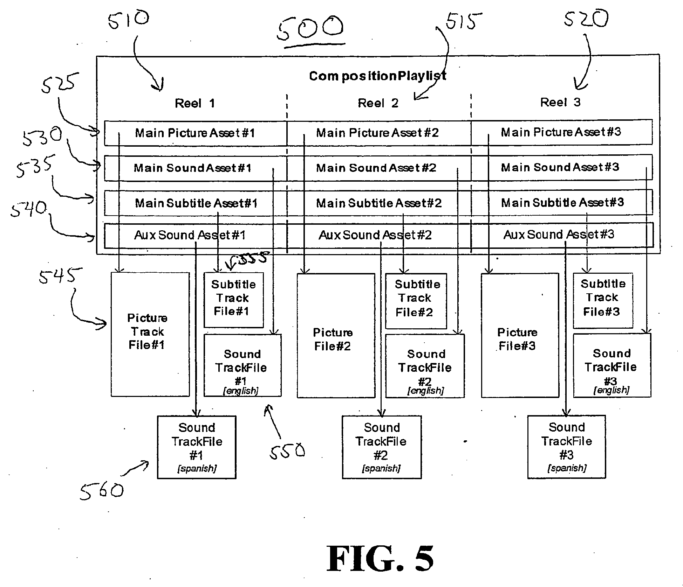

Turning now to FIG. 5, an exemplary CPL 500 containing an embodiment of the present invention is shown. The CPL 500 defines a composition as an ordered sequence of reels 510-520. Each reel 510-520 contains one or more media assets such as main picture asset 525, main sound asset 530, main subtitle asset 535 and, in accordance with one embodiment of the present invention, auxiliary sound asset 540. Each asset 525-540 in a given reel 510-520 points or links to a track file 545-560 containing essence to be reproduced in parallel. More specifically, each reel 510-520 in the CPL 500 preferably contains one main sound asset 530 linked to one soundtrack file 550. The soundtrack file 550 identified by the main sound asset 530 contains the sound essence to be reproduced in the auditorium 200 (FIG. 2), usually, through the main sound system 240a-f.

The auxiliary sound asset 540, in accordance with an embodiment of the present invention, links to an auxiliary soundtrack file 560 containing sound essence that is not already contained in the main soundtrack file 550. Although only one auxiliary sound asset 540 and auxiliary soundtrack file 560 is shown, multiple auxiliary sound assets and soundtrack files may be provided. Some examples of auxiliary sound essence include, but are not limited to, foreign soundtracks, narration sound for a Digital Cinema presentation, and the like. As discussed above in the description of FIG. 2, auxiliary sound could be reproduced through an auxiliary device 260 (e.g., headphones) in the auditorium 200.

It should be noted that the auxiliary sound preferably has the same operational constraints as the main sound. This enables the reuse of soundtrack files 550, 560 in CPLs as either main or auxiliary sound, as discussed in further detail below. It should also be noted that auxiliary sound preferably has the same audio characteristics as main sound. More specifically, the bit depth should be 24 bits per sample, the sample rate should be 48.000kHz or 96.000kHz matching the sample rate of the main sound in the composition, the channel count should be ≤ 16 full-bandwidth channels and the reference level should equal -20 dBFS.

The total channel count between the main and auxiliary soundtracks 550, 560 in the CPL 500 is preferably limited to 16 channels. This enables the cinema server 210 (or more precisely a Media Block (not shown) in the cinema server 210) to handle CPLs with both main and auxiliary sound.

The auxiliary soundtrack files 560 make use of additional decryption contexts. The number of parallel decryption contexts for a Digital Cinema presentation may be limited. Therefore, the number of auxiliary sound assets 540 in CPL 500 and associated auxiliary soundtracks 560 may also be limited.

The reproduction of the auxiliary soundtrack file 560 is preferably synchronized with the reproduction of the main picture track file 545 and main soundtrack file 550. Although sample accuracy is not needed, at least frame accuracy is desirable (i.e., synchronization error shall be between +/- one frame).

Although the main soundtrack files 550 in the CPL 500 could be altered to contain auxiliary soundtracks such as additional language soundtracks, one advantage of using the auxiliary sound structure of the embodiment of the present invention is the flexibility of reusing existing soundtrack files 550, 560 for multiple CPLs 500. For example, consider the case in which the same digital film is to be presented in a first auditorium 160a to a primarily Spanish-speaking audience and in a second auditorium 160b to a primarily English-speaking audience. Using the auxiliary sound structure of an embodiment of the present invention, the same Spanish and English soundtrack files 550 and 560 could be used for two different CPLs: the first CPL using Spanish as the main sound and English as auxiliary sound (not shown), and the second CPL using English as the main sound and Spanish as the auxiliary sound (as shown in FIG. 5). As a result, it should be appreciated that using the auxiliary sound structure of the embodiment of the present invention is more flexible than providing main and auxiliary soundtrack files in a single main soundtrack file because the embodiment of the present invention merely requires changing the links between the sound assets 530, 540 and the soundtrack files 550 and 560 in the CPL rather than creating a new main soundtrack file for different audiences having different language fluencies.

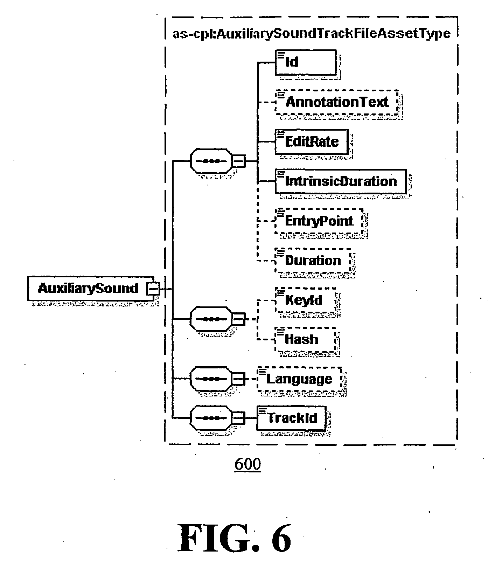

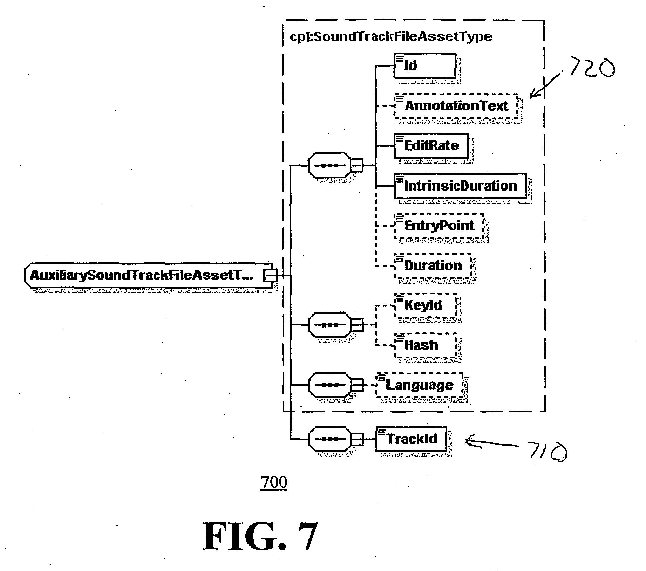

The auxiliary sound structure of an embodiment of the present invention defines additional sound essence that may be reproduced in parallel with the main soundtrack files and the other media assets in a reel. In particular, the AuxiliarySound element (FIG. 6) defines the auxiliary sound essence to be reproduced in a reel; and the AuxiliarySoundTrackFileAssetType(FIG. 7) describes a track file containing auxiliary sound essence.

Referring now to FIG. 6, an exemplary auxiliary sound element 600 of an embodiment of the present invention is shown. The auxiliary sound element 600 defines the sound essence for an auxiliary soundtrack to be reproduced in a reel. The actual sound essence is contained in an external track file, as previously discussed. The auxiliary sound element may be defined using XML schema, shown below. As shown in FIG. 6, the auxiliary sound element 600 is an instance of the AuxiliarySoundTrackFileAssetType structure. In a CPL, the auxiliary sound elements are preferably located inside the asset list element of reel elements.

Referring now to FIG. 7, an exemplary
AuxiliarySoundTrackFileAssetType structure 700 of an embodiment of the present invention is shown. The AuxiliarySoundTradkFileAssetType structure 700 describes a track file containing auxiliary sound essence.
As previously discussed, an instance of the
AuxiliarySoundTrackFileAssetType structure 700 is the auxiliary sound element 600.

The AuxiliarySoundTrackFileAssetType structure 700 is defined using XML schema, as shown below. A Trackld element 710 uniquely identifies the auxiliary soundtrack to which the auxiliary soundtrack file belongs. The TrackID element 710 is needed to distinguish between different auxiliary soundtracks in reels that contain multiple auxiliary soundtracks files (e.g., a reel containing a foreign soundtrack and a narration soundtrack). An AnnotationText element 720 is a free-form, human-readable text annotation associated with the auxiliary soundtrack file. The AnnotationText element 720 appears in at least one of, and preferably the first, auxiliary soundtrack file for each auxiliary soundtrack. The AnnotationText element 720 describes the purpose and use of the auxiliary soundtrack (e.g., "secondary Spanish soundtrack").

One possible methodology for implementing the integration of auxiliary media content with main presentation content is based on XML (extensible Markup Language), a standardized, clear-text computer code. XML is a standardized language intended for use in publishing content on the Internet, but is being used to define data in other areas. In Digital Cinema for instance, XML is the common language for describing content, the method to play the content, sub-titles, and associated metadata.

An example of the definition of an auxiliary sound structure in a CPL in XML schema is provided below.

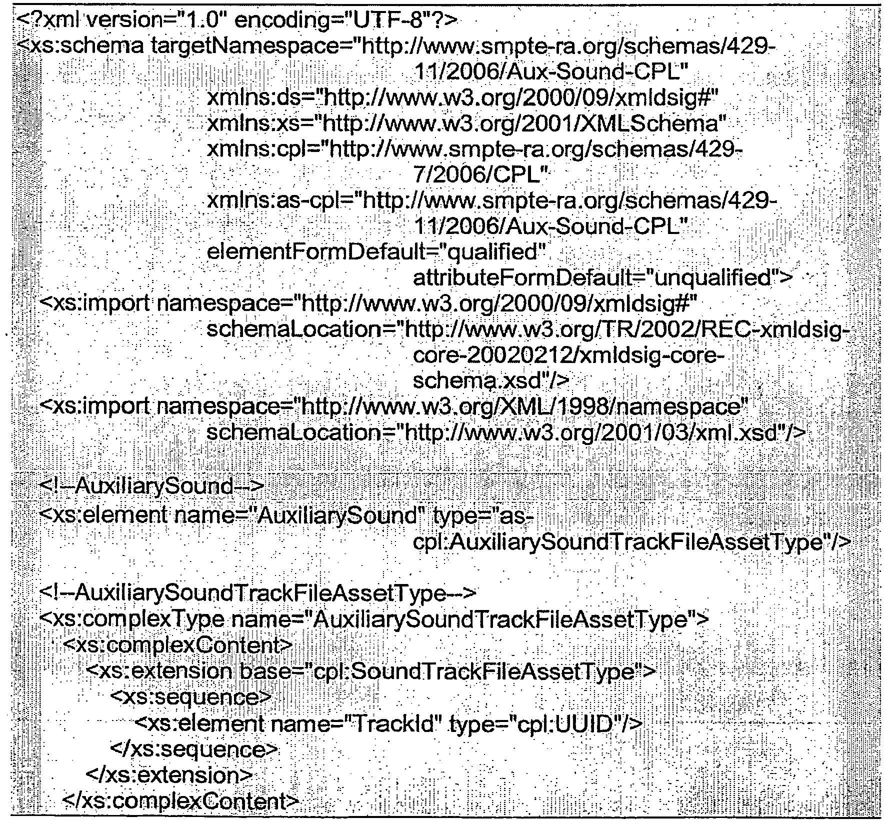

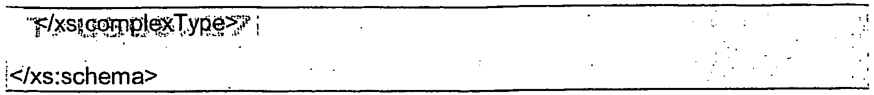

An example of a valid instance of a CPL and the auxiliary sound structures is provided below. The example represents a composition with one reel that contains one picture track file, one main soundtrack file, and one auxiliary soundtrack file.

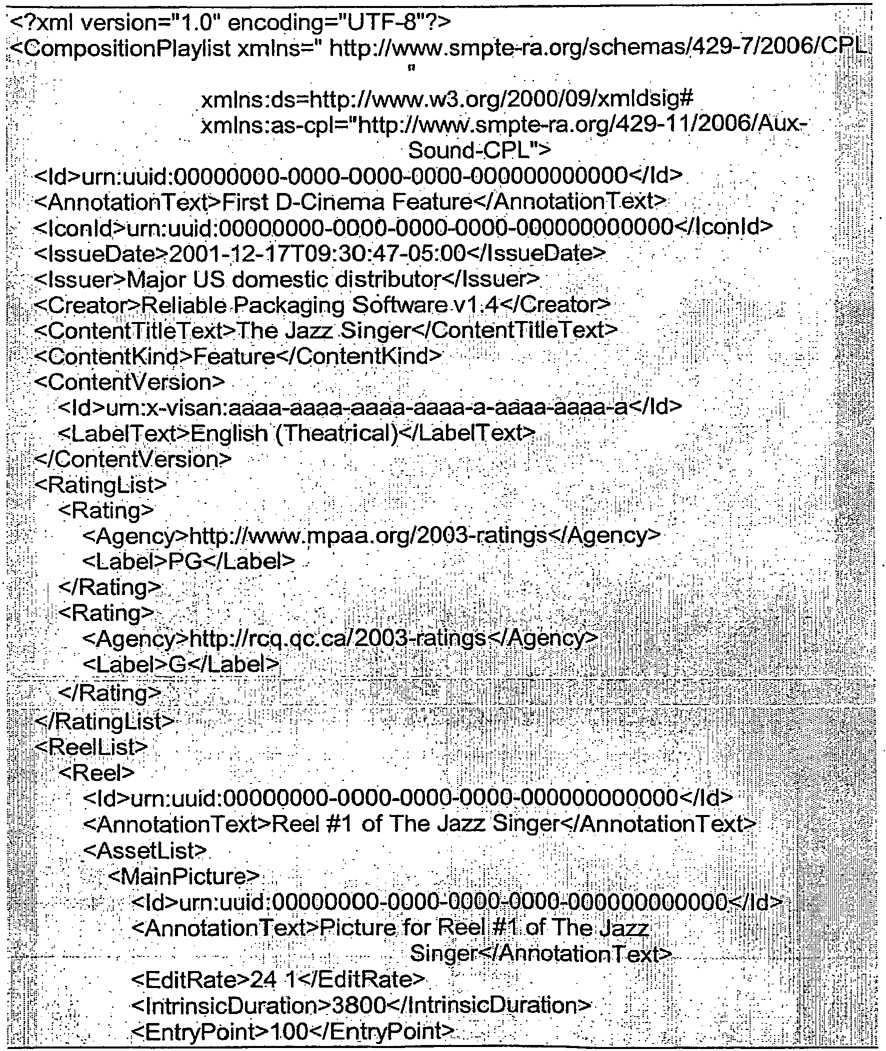

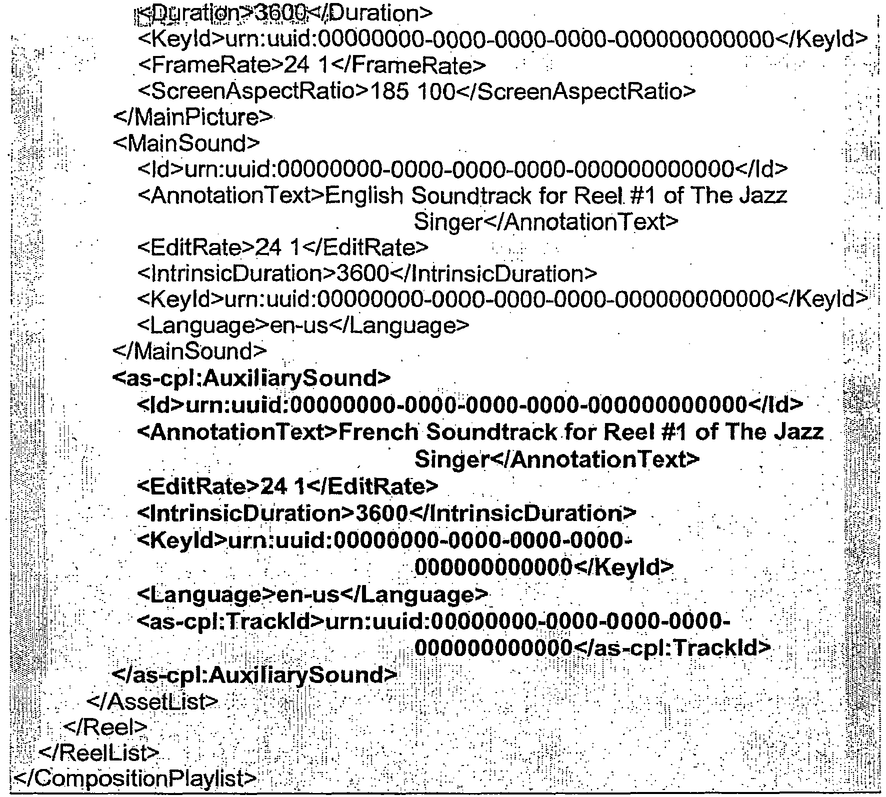

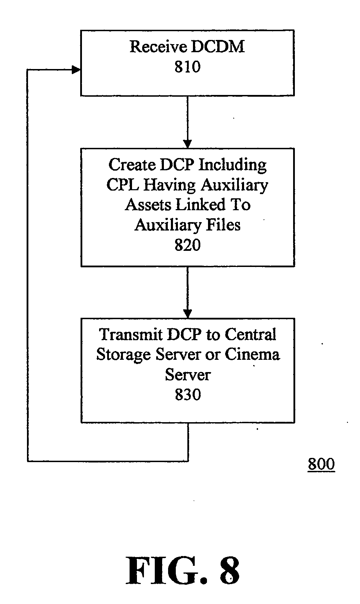

Referring now to FIG. 8, a flow chart illustrating a process 800 for creating a DCP containing a CPL having an auxiliary media asset (e.g., an auxiliary sound asset) linked to an auxiliary media track file (e.g., auxiliary soundtrack file) in accordance with an embodiment of the present invention is shown. Initially, at step 810, a packaging system (such as packaging system 420 in FIG. 4) receives a DCDM. As previously discussed, the DCDM contains all of the digital information (e.g., pictures, sounds and subtitles) needed for a presentation. Next, at step 820, the packaging system compresses, encrypts, and packages the pictures, sounds and subtitles contained in the DCDM to form a DCP. The DCP contains the essence to be presented including compressed and encrypted track files containing picture, sound and subtitle data and a CPI that dictates, among other things, how the track files are to be played. In accordance with an embodiment of the present invention, in addition to the main assets (e.g., main picture, sound and subtitle assets) linked to main track files (e.g., main picture, sound and subtitle track files) the CPL also contains auxiliary assets (e.g., auxiliary sound assets) linked to auxiliary track files (e.g., auxiliary soundtracks) that are to be processed and presented in parallel with the main assets and main track files. Next, at step 830, the DCP is transmitted to a central storage server (such as central storage server 130 shown in FIG 1) or a cinema server (such as cinema server 210 shown in FIG. 2) depending on the arrangement of the digital cinema system. As previously discussed, the transmission may be accomplished via a number of delivery systems such as, but not limited to, including tape, disk, satellite, wireless, or wired systems. After the DCP is transmitted, the packaging system returns to step 810 and waits for the reception of the next DCDM.

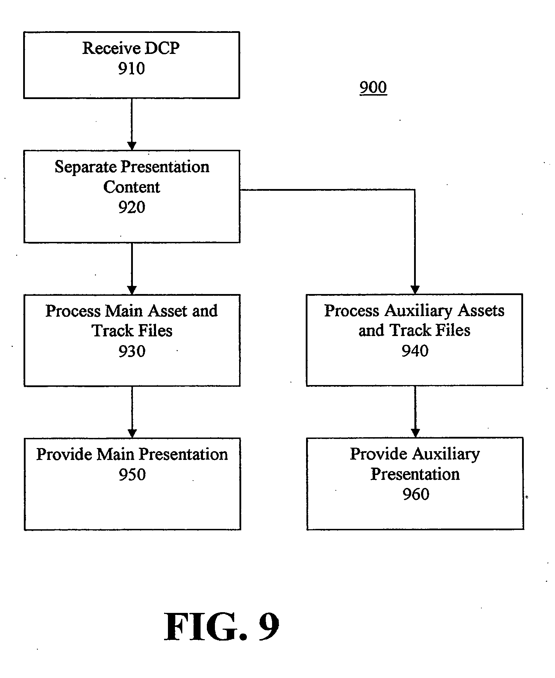

Referring now to FIG. 9, a flowchart illustrating a process 900 for receiving and processing a DCP containing a CPL having an auxiliary media asset (e.g., an auxiliary sound asset) linked to an auxiliary media track file (e.g., an auxiliary soundtrack file) in accordance with an embodiment of the present invention is shown. Initially, at step 910, a cinema server (such as cinema server 210 shown in FIG. 2) receives the DCP having an auxiliary media asset linked to an auxiliary media track file. Next, at step 920, the cinema server separates the various elements of the DCP into appropriate picture, audio, and subtitle signals for presentation. More specifically, the cinema server 210 separates the main picture, sound and subtitle assets 525, 530, 535 along with the associated picture, sound and subtitle track files 545, 550, 555 from the auxiliary sound asset 540 and associated auxiliary soundtrack files 560. Next, at step 930, the cinema server processes the main picture, sound and subtitle assets 525, 530, 535 along with the associated picture, sound and subtitle track files 545, 550, 555 and, at step 950, provides a picture signal and subtitle signal to the cinema projector 220 for display on the cinema screen 230, and an audio signal to the speakers 240a-f for reproduction of the main audio. In parallel with steps 930 and 950, the cinema server, at step 940 processes the auxiliary sound asset 540 and associated auxiliary soundtrack file 560 and, at step 960, provides an auxiliary sound signal to an auxiliary sound delivery system (e.g., auxiliary speakers provided in a sound-proof room having a view of cinema screen 230, through a wired system providing auxiliary audio to wired headphones provided at theater seats, through a wireless system utilizing the antenna 250 and auxiliary device 260 of FIG. 2, or through any other audio delivery system known by those skilled in the art) for reproduction of the auxiliary sound in parallel and synchronized (e.g., within a synchronization error of +/- one frame) with the displayed picture and subtitle and reproduced main audio.

While the invention may be susceptible to various modifications and alternative forms, specific embodiments have been shown by way of example in the drawings and are described in detail herein. However, it should be understood that the invention is not intended to be limited to the particular forms disclosed. Rather, the invention is to cover all modifications, equivalents and alternatives falling within the scope of the invention as defined by the following appended claims.

## Claims

1. A composition playlist (500) comprising:
main assets (525, 530) identifying a sound file (550) and a picture file (545) to be reproduced in parallel; and
an auxiliary asset (540) associated with at least one of said main assets (525, 530) and identifying an auxiliary file (560) to be reproduced in parallel with said sound file (550) and said picture file (545),
wherein said auxiliary asset (540) is an auxiliary sound asset (540) identifying an auxiliary sound file (560), and
wherein said sound file (550) is a primary language soundtrack file and said auxiliary sound file (560) is a secondary language soundtrack file.

2. The composition playlist (500) of claim 1, wherein said primary language sound file and said secondary language sound file have substantially the same operational constraints including at least one of an audio characteristic, a channel count, and a synchronization.

3. The composition playlist (500) of claim 1, wherein said sound file (550) can be redefined as an auxiliary sound file (560) by associating said auxiliary asset (540) with said sound file (550).

4. The composition playlist (500) of claim 1, wherein said auxiliary sound file (560) can be redefined as a sound file (550) by associating said main asset (530) with said auxiliary sound file (560).

5. The composition playlist (500) of claim 1, wherein said main assets (535) further identify subtitle files (555) to be reproduced in parallel with said sound and picture files (550, 545).

6. The composition playlist of claim 5, wherein said auxiliary asset (540) is an auxiliary subtitle asset identifying an auxiliary subtitle file.

7. The composition playlist of claim 1, wherein said auxiliary asset (540) is a plurality of auxiliary sound assets (540) identifying a plurality of auxiliary sound files (560).

8. The composition playlist of claim 7, wherein said sound file (550) is a primary language soundtrack file and said plurality of auxiliary sound files (560) are a plurality of additional language soundtrack files.

9. A method for packaging an auxiliary media track, said method comprising the steps of:
receiving a digital cinema distribution master (810) that contains media tracks;
identifying main media tracks (545, 550, 555);
identifying an auxiliary media track (560); and
creating (820) a digital cinema package containing said main media tracks (545, 550, 555), said auxiliary media track (560), and instructions (500) to reproduce said main media tracks and said auxiliary media tracks in parallel,
wherein said main media tracks include a picture track (545), a soundtrack (550), and a subtitle track (555), and said auxiliary media track includes an auxiliary sound track (560), and
wherein said soundtrack (550) is a primary language soundtrack and said auxiliary soundtrack (560) is a secondary language soundtrack.

10. The method of claim 9, further comprising the step of:
transmitting (830) said digital cinema package to a remote server.

11. The method of claim 10, wherein said remote server is at least one of a central storage server 130 and a cinema server 210.

12. A method for reproducing an auxiliary media track, said method including the steps of:
receiving (910) a digital cinema package containing presentation content;
separating (920) a main presentation content from an auxiliary presentation content;
processing (930) said main presentation content to extract main media tracks;
processing (940) said auxiliary presentation content to extract an auxiliary media track; and
providing (950, 960) said main media tracks in parallel with said auxiliary media track,
wherein said main media tracks include a picture track (545) and a soundtrack (55); and said auxiliary media track includes an auxiliary soundtrack (560), and
wherein said soundtrack (550) is a primary language soundtrack and said auxiliary soundtrack (560) is a secondary language soundtrack.

13. The method of claim 12, wherein the step of providing (950, 960) further comprises the steps of:
reproducing said primary language soundtrack on a theater's primary sound system (240a-f); and
reproducing said secondary language soundtrack on a theater secondary sound system (250, 260).

14. The method of claim 13, wherein the theater's secondary sound system (250, 260) is one of a speaker system contained in a sound proof room, a wireless headphone system, and a wired headphone system.

## Patentansprüche

1. Composition Playlist (500), die umfasst:
Hauptbestände (525, 530), die eine Tondatei (550) und
eine Bilddatei (545), die parallel wiedergegeben werden sollen, identifizieren; und
einen Hilfsbestand (540), der mit mindestens einem der Hauptbestände (525, 530) verknüpft ist und eine Hilfsdatei (560), die parallel mit der Tondatei (550) und mit der Bilddatei (545) wiedergegebenen werden soll, identifiziert,
wobei der Hilfsbestand (540) ein Hilfstonbestand (540) ist, der eine Hilfstondatei (560) identifiziert, und wobei die Tondatei (550) eine Primärsprachen-Tonspurdatei ist und die Hilfstondatei (560) eine Sekundärsprachen-Tonspurdatei ist.

2. Composition Playlist (500) nach Anspruch 1, wobei die Primärsprachen-Tondatei und die Sekundärsprachen-Tondatei im Wesentlichen dieselben Betriebsbeschränkungen einschließlich einer Audioeigenschaft und/oder einer Kanalzahl und/oder einer Synchronisation aufweisen.

3. Composition Playlist (500) nach Anspruch 1, wobei die Tondatei (550) durch Verknüpfen des Hilfsbestands (540) mit der Tondatei (550) als eine Hilfstondatei (560) neu definiert werden kann.

4. Composition Playlist (500) nach Anspruch 1, wobei die Hilfstondatei (560) durch Verknüpfen des Hauptbestands (530) mit der Hilfstondatei (560) als eine Tondatei (550) neu definiert werden kann.

5. Composition Playlist (500) nach Anspruch 1, wobei die Hauptbestände (535) ferner Untertiteldateien (555) identifizieren, die parallel mit der Ton- und mit der Bilddatei (550, 554) wiedergegeben werden sollen.

6. Composition Playlist nach Anspruch 5, wobei der Hilfsbestand (540) ein Hilfsuntertitelbestand ist, der eine Hilfsuntertiteldatei identifiziert.

7. Composition Playlist nach Anspruch 1, wobei der Hilfsbestand (540) mehrere Hilfstonbestände (540) sind, die mehrere Hilfstondateien (560) identifizieren.

8. Composition Playlist nach Anspruch 7, wobei die Tondatei (550) eine Primärsprachen-Tondatei ist und die mehreren Hilfstondateien (560) mehrere Zusatzsprachen-Tondateien sind.

9. Verfahren zum Packen einer Hilfsmedienspur, wobei das Verfahren die folgenden Schritte umfasst:
Empfangen eines Digital Cinema Distribution Master (810), der Medienspuren enthält;
Identifizieren von Hauptmedienspuren (545, 550, 555);
Identifizieren einer Hilfsmedienspur (560); und
Erstellen (820) eines Digital Cinema Package, das die Hauptmedienspuren (545, 550, 555), die Hilfsmedienspur (560) und Anweisungen (500) zum parallelen Wiedergeben der Hauptmedienspuren und der Hilfsmedienspuren enthält,
wobei die Hauptmedienspuren eine Bildspur (545), eine Tonspur (550) und eine Untertitelspur (555) enthalten und wobei die Hilfsmedienspur eine Hilfstonspur (560) enthält, und
wobei die Tonspur (550) eine Primärsprachen-Tonspur ist und die Hilfstonspur (560) eine Sekundärsprachen-Tonspur ist.

10. Verfahren nach Anspruch 9, das ferner den folgenden Schritt umfasst:
Senden (830) des Digital Cinema Package an einen fernen Server.

11. Verfahren nach Anspruch 10, wobei der ferne Server ein Zentralspeicherserver (130) und/oder ein Kinoserver (210) ist.

12. Verfahren zum Wiedergeben einer Hilfsmedienspur, wobei das Verfahren die folgenden Schritte enthält:
Empfangen (910) eines Digital Cinema Package, das Darstellungsinhalt enthält;
Trennen (920) eines Hauptdarstellungsinhalts von einem Hilfsdarstellungsinhalt;
Verarbeiten (930) des Hauptdarstellungsinhalts zum Extrahieren von Hauptmedienspuren;
Verarbeiten (940) des Hilfsdarstellungsinhalts zum Extrahieren einer Hilfsmedienspur; und
paralleles Bereitstellen (950, 960) der Hauptmedienspuren mit der Hilfsmedienspur,
wobei die Hauptmedienspuren eine Bildspur (545) und eine Tonspur (55) enthalten, wobei die Hilfsmedienspur eine Hilfstonspur (560) enthält, und
wobei die Tonspur (550) eine Primärsprachen-Tonspur ist und die Hilfstonspur (560) eine Sekundärsprachen-Tonspur ist.

13. Verfahren nach Anspruch 12, wobei der Schritt des Bereitstellens (950, 960) ferner die folgenden Schritte umfasst:
Wiedergeben der Primärsprachen-Tonspur im Primärtonsystem (240a-f) eines Theaters; und
Wiedergeben der Sekundärsprachen-Tonspur im Sekundärtonsystem (250, 260) eines Theaters.

14. Verfahren nach Anspruch 13, wobei das Sekundärtonsystem (250, 260) des Theaters ein in einem Schallschutzraum enthaltenes Lautsprechersystem und/oder ein drahtloses Kopfhörersystem und/oder ein verdrahtetes Kopfhörersystem ist.

## Revendications

1. Liste de diffusion de compositions (500), comprenant :
des dispositifs principaux (525, 530) identifiant un fichier de sons (550) et un fichier d'images (545) devant être reproduits en parallèle; et
un dispositif auxiliaire (540) associé à au moins un desdits dispositifs principaux (525, 530) et identifiant un fichier auxiliaire (560) devant être reproduit en parallèle audit fichier sonore (550) et audit fichier d'images (545),
dans lequel ledit dispositif auxiliaire (540) est un dispositif sonore auxiliaire (540) identifiant un fichier sonore auxiliaire (560), et
dans lequel ledit fichier sonore (550) est un fichier de piste sonore en langage primaire et ledit fichier sonore auxiliaire (560) est un fichier de piste sonore en langage secondaire.

2. La liste de diffusion de compositions (500) de la revendication 1, dans laquelle ledit fichier sonore en langage primaire et ledit fichier sonore en langage secondaire disposent en grande partie des mêmes contraintes de fonctionnement y compris au moins une caractéristique audio, un comptage de canaux et une synchronisation.

3. La liste de diffusion de compositions (500) de la revendication 1, dans laquelle ledit fichier sonore (550) peut être redéfini comme étant un fichier sonore auxiliaire (560) par association dudit dispositif auxiliaire (540) audit fichier sonore (550).

4. La liste de diffusion de compositions (500) de la revendication 1, dans laquelle ledit fichier auxiliaire (560) peut être redéfini comme étant un fichier sonore (550) par association dudit dispositif principal (530) audit fichier sonore auxiliaire (560).

5. La liste de diffusion de compositions (500) de la revendication 1, dans laquelle ledit dispositif principal (535) identifie en outre les fichiers de sous-titres (555) afin qu'ils soient reproduits parallèlement auxdits fichiers sonores et d'image (550, 545).

6. La liste de diffusion de compositions de la revendication 5, dans laquelle ledit dispositif auxiliaire (540) est un dispositif de sous-titrage auxiliaire identifiant un fichier de sous-titres auxiliaire.

7. La liste de diffusion de compositions selon la revendication 1, dans laquelle ledit dispositif auxiliaire (540) est une pluralité de dispositifs sonores auxiliaires (540) identifiant une pluralité de fichiers sonores auxiliaires (560).

8. La liste de diffusion des compositions selon la revendication 7, dans laquelle ledit fichier sonore (550) est un fichier de piste sonore en langage primaire et ladite pluralité de fichiers sonores auxiliaires (560) est une pluralité de fichiers de pistes en langages supplémentaires.

9. Un procédé de packaging d'une piste de données auxiliaire, ledit procédé comprenant les étapes suivantes :
réception d'un distributeur principal de compositions cinématographiques numériques (810) contenant des pistes de données multimédia ;
identification des pistes de données multimédia principales (545, 550, 555);
identification d'une piste de données multimédia auxiliaire (560) ; et
création (820) un package de compositions cinématographiques numériques contenant lesdites pistes de données multimédia principales (545, 550, 555), ladite piste de données multimédia auxiliaire (560), et les instructions (500) pour reproduire en parallèle lesdites pistes de données multimédia principales et lesdites pistes de données multimédia auxiliaires,
dans lequel lesdites pistes de données multimédia principales comprennent une piste d'images (545), une piste sonore (550), et une piste de sous-titrages (555), et ladite piste de données multimédia auxiliaire comprend une piste sonore auxiliaire (560), et
où ladite piste sonore (550) est une piste sonore en langage primaire et ladite piste sonore auxiliaire (60) est une piste sonore en langage secondaire.

10. Le procédé selon la revendication 9, comprenant en outre l'étape suivante : transmission (830) dudit package cinématographique numérique vers un serveur distant.

11. Le procédé selon la revendication 10, dans lequel ledit serveur distant est au moins un serveur de stockage central 130 et un serveur cinématographique 210.

12. Un procédé de reproduction d'une piste de données auxiliaire, ledit procédé comprenant les étapes suivantes :
réception (910) d'un package cinématographique numérique comprenant un contenu de présentation ;
séparation (920) d'un contenu de présentation principal d'un contenu de présentation auxiliaire ;
traitement (930) dudit contenu de présentation principal afin d'extraire les pistes multimédia principales ;
traitement (940) dudit contenu de présentation auxiliaire afin d'extraire une piste multimédia auxiliaire ; et
fourniture (950, 960) desdites pistes multimédia principales parallèlement à ladite piste multimédia auxiliaire,
où lesdites pistes multimédia principales comprennent une piste d'images (545) et une piste sonore (55) ; et ladite piste multimédia auxiliaire comprend une piste sonore auxiliaire (560), et
où ladite piste sonore (550) est une piste sonore en langage primaire et ladite piste sonore auxiliaire (560) est une piste sonore en langage secondaire.

13. Le procédé selon la revendication 12, dans lequel l'étape de fourniture (950, 960) comprend en outre les étapes suivantes :
reproduction de ladite piste sonore en langage primaire sur le système d'ambiophonie principal d'une salle de cinéma (240a-f) ; et
reproduction de la piste sonore en langage secondaire sur le système d'ambiophonie secondaire d'une salle de cinéma (250, 260).

14. Le procédé selon la revendication 13, dans lequel le système d'ambiophonie secondaire de la salle de cinéma (250, 260) est constitué d'un système de haut-parleur contenu dans une pièce insonorisée, d'un système de casque sans fil et d'un système de casque filaire.
